# EUROPÄISCHE PATENTSCHRIFT

(11) **EP 2 550 129 B1**
(45) Veröffentlichungstag und Bekanntmachung des Hinweises auf die Patenterteilung: **28.02.2018**
(21) Anmeldenummer: 11701667.5
(22) Anmeldetag: 31.01.2011
(51) Int. Cl.: B23K 26/00, B23K 26/36, B23K 26/40, C03B 33/02, C03B 33/04, C03B 33/09, B23K 103/16, B23K 103/00, B23K 26/0622, C03B 33/07

(54) **VERFAHREN UND VERWENDUNG EINER VORRICHTUNG ZUM HERAUSTRENNEN VON EINZELSCHEIBEN AUS EINER VERBUNDGLASTAFEL**
PROCESS AND USE OF AN APPARATUS FOR SEPARATING INDIVIDUAL PANES FROM A LAMINATED GLASS SHEET
PROCÉDÉ ET UTILISATION D'UN DISPOSITIF POUR SÉPARER DES VITRES SÉPARÉES D'UN PANNEAU DE VERRE FEUILLETÉ

(30) Priorität: 22.03.2010 DE 102010012265
(43) Veröffentlichungstag der Anmeldung: 30.01.2013
(73) Patentinhaber: Fraunhofer-Gesellschaft zur Förderung der angewandten Forschung e.V., 80686 München (DE)
(72) Erfinder: KÜBLER, Rainer, 79106 Freiburg (DE); RIST, Tobias, 79194 Gundelfingen (DE); HÖTGER, Bernhard, 37697 Lauenförde (DE)
(74) Vertreter: Patent- und Rechtsanwälte Dr. Solf & Zapf
(86) Internationale Anmeldenummer: PCT/EP2011/051317
(87) Internationale Veröffentlichungsnummer: WO 2011/117006

(56) Entgegenhaltungen:
- WO-A1-2010/031664
- DE-A1- 3 147 385
- DE-A1- 3 223 089
- DE-T2- 69 719 989
- JP-A- 2004 182 530
- JP-A- 2005 104 819
- US-A- 4 467 168
- US-A1- 2008 236 199
- US-B1- 6 592 703

## Beschreibung

Die Erfindung betrifft ein Verfahren und eine Verwendung einer Vorrichtung zum Heraustrennen von Einzelscheiben vorgegebener Abmessung aus einer Verbundglastafel.

Mit "Heraustrennen" von Einzelscheiben soll im Sinne der Erfindung das Ritzen der Glastafelscheibenoberfläche entlang vorgegebener Trennlinien und Brechen, insbesondere durch Biegen oder durch Ultraschallenergie entlang der Ritzlinien verstanden werden.

Verbundglastafeln im Sinne der Erfindung sind hauptsächlich ebenflächige oder gekrümmte Rohglastafeln mit z. B. einer Breite von 3,3 m und einer Länge von 9 m aus Verbundsicherheitsglas (im Folgenden auch VSG genannt) aber auch insbesondere in Photovoltaikanlagen verwendete Glasrohmodule, die in der Regel eine Frontglas- und eine Rückglastafel und dazwischen eine Verbundfolie aus z. B. Polyvinylbutyral (PVB) aufweisen.

Verbundsicherheitsglas besteht meist aus zwei oder mehr übereinander angeordneten Klarglastafelscheiben mit gleicher oder unterschiedlicher Dicke. Zwischen den Scheiben befinden sich Verbundkunststofffolien - im Folgenden auch Verbundfolie oder Folie genannt - aus einer oder mehreren Lagen. Als Verbundfolie werden in der Regel Polyvinylbutyralfolien verwendet.

Umfangreicher Stand der Technik auf dem Sachgebiet wird z. B. in der EP 596 852 A1 beschrieben.

JP-2005-104819 A offenbart ein Verfahren zum Trennen von Verbundsicherheitsglas, bei dem in einem ersten Schritt eine Zwischenlage mittels eines Lasers bearbeitet wird. Anschließend oder gleichzeitig erfolgt ein Anritzen der Glasschichten mittels Schneidrad oder mittels eines weiteren Lasers. Zum Abtrennen wird das Verbundsicherheitsglas im Trennbereich auf Biegung beansprucht.

Aus der JP-2004-182530A ist bekannt, in einem Arbeitsgang eine Verbundglastafel in vorgegebenen Aufteilungslinien mittels Laserstrahlen von Lasereinrichtungen zu trennen, um z. B. vereinzelte Verbundglasscheiben vorgegebener Größe herzustellen. Dazu wird mit einer Trennvorrichtung, die eine vorgeordnete erste Lasereinrichtung und zwei sich gegenüberliegend angeordnete, nachfolgende zweite Lasereinrichtungen aufweist, über eine Verbundglastafel gefahren, wobei der Laserstrahl der vorgeordneten Lasereinrichtung die Verbundfolie zwischen den Verbundglastafelscheiben linienförmig erhitzen und dadurch durchtrennen soll, während gleichzeitig mit den nachgeordneten Lasereinrichtungen im gleichen Arbeitsgang die jeweilige Verbundglastafelscheibe linienförmig erhitzt und anschließend die erhitzten Bereiche mit Kühlmittel gekühlt werden sollen, wobei Risse an der Oberfläche der Scheiben gebildet werden sollen. Anschließend soll mit einer Ultraschalleinrichtung das Brechen der Verbundglastafelscheiben entlang der Oberflächenrisse bewirkt werden.

Bei diesem bekannten Verfahren sollen die durch den Laserstrahl erzeugten Zersetzungsprodukte des Folienmaterials zwischen den Verbundglastafelscheiben eingeschlossen und von der Außenatmosphäre abgeschottet bleiben, damit es nicht zu einer Oxidation bzw. Verbrennung von Folienmaterial kommt. Zu diesem Zweck wird zusätzlich mit einem Ritzgerät ein von einer Verbundglastafelscheibe ausgehender anfänglicher Oberflächenriss mit einem Werkzeug mechanisch geritzt und der Laserstrahl für das Trennen der Folie erst am Ende des geritzten Risses ausreichend entfernt von der Kante der VSG-Tafel angesetzt.

Es ist im Rahmen der vorliegenden Erfindung versucht worden, die Lehre dieses Standes der Technik nachzuarbeiten. Dabei ist festgestellt worden, dass die Verbundglastafelscheiben nach der Laserbehandlung im Bereich der Beaufschlagung mit Laserenergie zerplatzen und eine akzeptable Bruchkantenqualität, insbesondere beim Brechen durch Biegen der Verbundglastafelscheiben nicht erreichbar ist.

Aufgabe der Erfindung ist, ein einfaches Verfahren und eine Verwendung einer Vorrichtung zu schaffen, mit denen unter Einbeziehung der Laserstrahltechnik ein Heraustrennen von Verbundglasscheiben aus Verbundglastafeln mit sehr guter Bruchkantenqualität technisch und wirtschaftlich möglich ist.

Diese Aufgabe wird durch die Merkmale der Ansprüche 1 und 9 gelöst. Vorteilhafte Weiterbildungen der Erfindung werden in den Unteransprüchen gekennzeichnet.

Die Erfindung sieht vor, für während des Laserns durch Wärmeenergie entstehende gasförmige und gegebenenfalls auch flüssige Zersetzungsprodukte - im Folgenden auch Fluide genannt - der Verbundglaskunststofffolie eine Möglichkeit zu schaffen, nach außen z. B. ins Freie, d. h. in die die Verbundglastafel umgebende Atmosphäre zu entweichen. Es ist im Rahmen der vorliegenden Erfindung erkannt worden, dass bei dem bekannten Verfahren die Zersetzungsprodukte der Verbundfolie einen hohen Druck zwischen den Verbundglastafelscheiben aufbauen und das neben der in der Verbundfolie erzeugten Laserstrahlbrennspur benachbarte Glasmaterial sehr stark erhitzt und unter bleibende Druckspannung gesetzt wird. Diese Druckspannung wirkt offenbar beim Brechen der Glastafel nach dem nachfolgenden Lasern der Glastafelscheibenoberflächen entlang der vorgegebenen Trennlinien dem von der Oberfläche der Glastafelscheiben ausgehenden Rissfortschritt entgegen, so dass Ausmuschelungen und Ausbruch im Kantenbereich entstehen, die die Kantenqualität derart beeinträchtigen, dass Ausschussware in inakzeptablem Umfang produziert wird. Selbst ein mechanisches Ritzen der Glastafelscheibenoberflächen anstelle des Laserns und das anschließende Brechen führen zu keinem brauchbaren Ergebnis.

Anhand der Zeichnung wird die Erfindung im Folgenden beispielhaft näher erläutert. In der Zeichnung sind die Verhältnisse der dargestellten Abmessungen nicht der Wirklichkeit entsprechend; z. B. sind die Verbundglastafeln wesentlich größer im Verhältnis zum Durchmesser einer Laserstrahlbrennspur. Es zeigen:
- Fig. 1: schematisch eine Seitenansicht einer Einrichtung zum Lasern der Verbundglastafelfolie zwischen zwei Verbundglastafelscheiben;
- Fig. 2: schematisch und perspektivisch eine gelegte Laserstrahlbrennspur in der Verbundglastafelfolie einer Verbundglastafel;
- Fig. 3: schematisch und perspektivisch eine Verbundglastafel mit gelegten Laserstrahlbrennpunktspuren in der Verbundglastafelfolie für das Trennen von Modellglasscheiben.

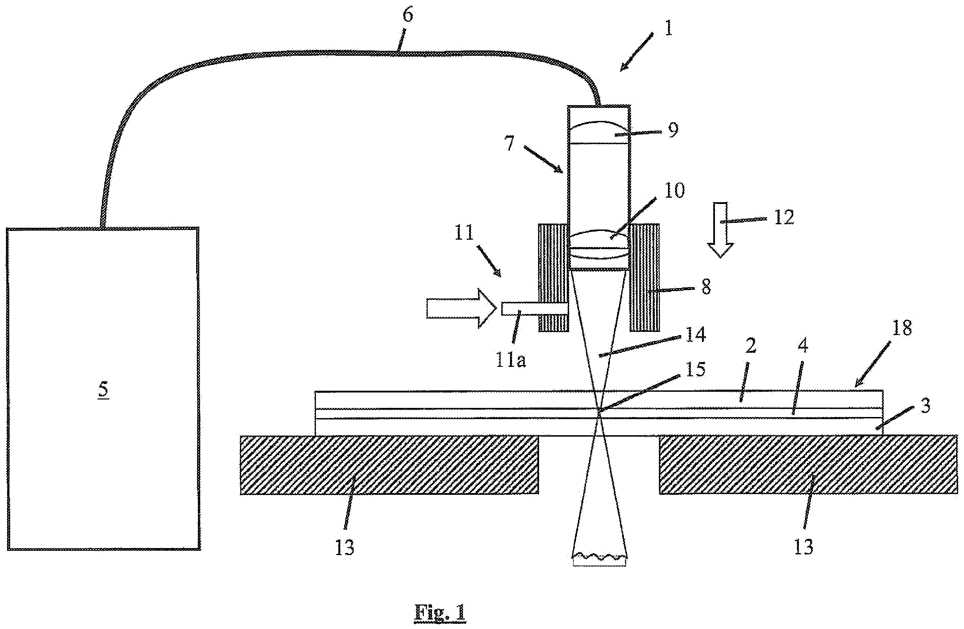

Eine Laserstrahlspurerzeugungseinrichtung 1 zum Legen eines Laserstrahlbrennpunktspurkanals 17 (im Folgenden auch Laserstrahlbrennspur oder Laserbrennspur oder Brennspur genannt) in eine zwischen zwei Verbundglastafelscheiben 2, 3 einer Verbundglastafel 16 angeordnete Verbundglastafelkunststofffolie 4 weist gemäß Fig. 1 eine Laserstrahlerzeugungsvorrichtung 5 auf, in der ein Laserstrahl mit vorbestimmter Energie erzeugt wird. Mit dem Begriff "Laserstrahlbrennpunktspurkanal" wird im Rahmen der Erfindung der lineare, gegebenenfalls noch Reste von Zersetzungsprodukten der Folie enthaltende, durch den Brennpunkt des Laserstrahls bewirkte, z. B. im Wesentlichen folienmaterialbefreite Kanal zwischen den Tafelscheiben 2, 3 bezeichnet, wobei die linienförmige Spur geradlinig oder gekrümmt verlaufen kann. Im Kanal 17 können auch noch zusammenhängende Folienbestandteile vorhanden sein, die aber so strukturgeschwächt sind, dass sie ohne nennenswerten Kraftaufwand beim oder nach dem anschließenden Brechen auseinandergezogen werden können. Wesentlich ist aber auch dabei, dass der Kanal 17 Durchgangswege, z. B. materialfreie Räume und/oder offene Porenstrukturen, z. B. offene Kanalporenstrukturen für Zersetzungsprodukte (Fluide) der Folie bis zu mindestens einer Tafelscheibenkante 18 gewährleistet, so dass der Kanalraum überdruckfrei bleiben kann.

Der Laserstrahl wird zweckmäßigerweise über ein Lichtleitkabel 6, z. B. ein Glasfaserkabel 6, in eine Laserstrahlrichteinheit, z. B. eine Fokussiereinrichtung 7 geführt, die der Laserstrahl durchdringt. Die Fokussiereinheit 7 lagert in einem Trägergehäuse 8, das strahlausgangsseitig zweckmäßigerweise offen ist. In der Fokussiereinheit 7 ist strahleingangsseitig mindestens eine Kollimatorlinse 9 und strahlausgangsseitig mindestens eine Fokussierlinse 10 z. B. in Form einer achromatischen Doppellinse angeordnet. Erfindungsgemäß ist eine z. B. mindestens eine Gasleitung 11a aufweisende Reinigungseinrichtung 11 vorgesehen, die mit dem Trägergehäuse 8 in Verbindung steht und in Strahlrichtung 12 hinter der Fokussierlinse 10 einmündet und mit der ein insbesondere ölfreier und staubfreier Spülgasstrom, z. B. Stickstoffgas von außen in das Trägergehäuse 8 hinein und wieder heraus geleitet werden kann, der eine äußere Verschmutzung der Optik, z. B. der Linse 10, durch z. b. beim Lasern entstehende Rauchgase verhindert. Diese Spülung steht im erfindungsgemäßen Zusammenhang mit dem Austreiben von Zersetzungsfluiden aus der Folie beim Lasern ins Freie. Denn durch die Spülung kann verhindert werden, dass sich Stoffe, z. B. Fluide und/oder Kohlenwasserstoffe aus der Luft auf der Oberfläche der Linse 10 niederschlagen und gegebenenfalls sogar dort einbrennen.

Das Trägergehäuse 8 der erfindungsgemäßen Laserstrahlspurerzeugungseinrichtung 1 kann z. B. oberhalb oder unterhalb eines Glasschneideauflagetisches 13 an einer entlang des Tisches 13 verfahrbaren Brückeneinrichtung (nicht dargestellt) angeordnet sein und z. B. automatisch in vertikaler und horizontaler Richtung an der Brücke versetzt werden, oder sie wird ortsfest oberhalb oder unterhalb des Tisches 13 angeordnet, und die zu lasernde Verbundglastafel 16 wird horizontal beim Lasern verschoben.

Die Fokussiereinheit 7 kollimiert und fokussiert den Laserstrahl 14 zu einem Brennpunkt 15, der in die Kunststofffolie 4 der Verbundglastafel 16 eingebracht wird und dort die Folienstruktur schwächt und/oder zum Schmelzen und/oder Zersetzen bringt. Dabei wird die Laserstrahlenergie so gewählt, dass damit das Folienmaterial und nicht das in der Regel aus Klarglas bestehende Glasmaterial angeregt wird.

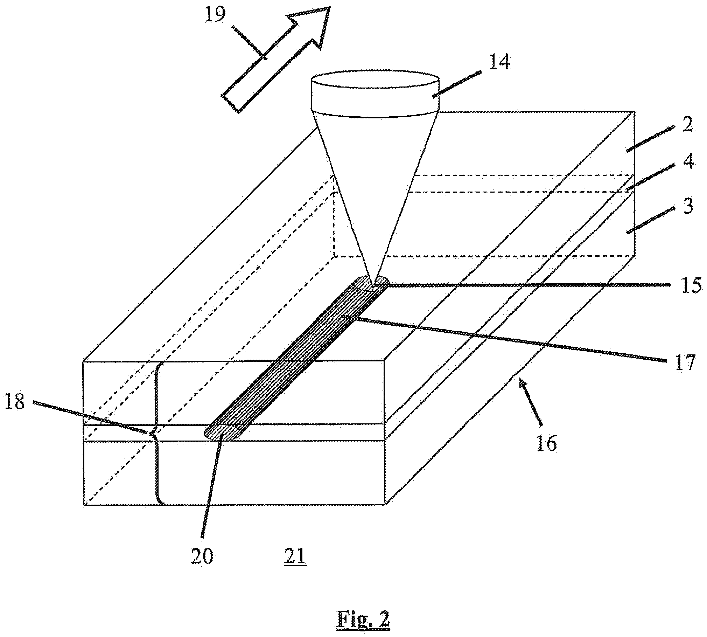

Fig. 2 zeigt schematisch eine geradlinige Brennspur 17, ausgehend erfindungsgemäß von einer Glastafelkante 18 in Richtung des Pfeiles 19 und eingebracht in die Kunststofffolie 4 zwischen zwei Verbundglastafelscheiben 2, 3 mittels des Brennpunktes 15 des Laserstrahls 14, wobei die Querschnittsfläche der Brennspur 17 z. B. größer ist als die senkrecht zur Richtung des Laserstrahls 14 liegende Brennpunktfläche des Brennpunkts 15.

Wesentlich ist, dass das Lasern derart durchgeführt wird, dass die Brennspur 17 während des fortschreitenden Laserns der Spur bzw. während der linienförmigen Zersetzung der Folie zur Außenatmosphäre 21 immer offene Zuwege zur Ausgangsöffnung 20 z. B. an einer Glastafelkante 18 gewährleistet, so dass während des Laserns laufend entstehende fluide Zersetzungsprodukte, insbesondere Zersetzungsgase, aus der Öffnung 20 während des fortschreitenden Laserns entweichen können und sich kein schädigender Überdruck in der Brennspur 17 aufbaut.

In Fig. 2 ist ein freier Brennkanal bzw. eine freie Brennspur 17 idealisiert dargestellt. In Wirklichkeit kann in der Brennspur 17 noch mehr oder weniger verbranntes bzw. zersetztes Folienmaterial nach dem Lasern vorhanden sein, das porös sein kann und einen offenen Durchgang jeweils in Richtung Öffnung 20 gewährleistet. Auch handelt es sich bei der Öffnung 20 nicht immer um ein rundes, freies Loch, wie abgebildet, sondern es können dort einmündende offene Poren, z. B. Kanalporen in Zersetzungsprodukten oder Restbestandteilen der Verbundfolie vorliegen.

Der Laserstrahl zerstört oder zersetzt in seinem Brennpunkt 15 durch die Erzeugung von Wärmeenergie die Struktur des Verbundfolienmaterials z. B. durch Schmelzen und/oder Sublimieren und/oder Verbrennen, wobei Überdruck erzeugt wird, der in Richtung Außenatmosphäre über die Öffnung 20 abgebaut wird. In der Brennspur 17 können auch zusammenhängende Reststoffe der Verbundfolie verbleiben, die aber eine Trennung der Folie entlang der Brennspur 17 nach dem Brechen nicht behindern und die Folienstruktur zumindest so schwächen, dass kein beachtlicher Widerstand gegen das Trennen mehr vorhanden ist.

Gleichzeitig mit einer derartigen Störung oder Zerstörung der Struktur des Folienmaterials wird im engeren benachbarten Brennpunktumfeld das Glasmaterial der Verbundglastafeln 2, 3 zonal vom Folienmaterial miterhitzt. Jedoch wird durch den Abtransport von heißem Abdampf bzw. Zersetzungsmaterial, insbesondere von heißen Fluiden, z. B. Zersetzungsgasen, eine schnelle Abkühlung dieser Glaszonen bewirkt, woraus eine innerhalb des Glasmaterials liegende schmale, bleibende Zugspannungszone beidseits der Brennspur in der Glasstruktur resultieren kann. Die erfindungsgemäß erzeugten Brennspur benachbarten Zugspannungen können die von der Oberfläche kommende Bruchfront beim Brechen des Glasmaterials nach einem Ritzen positiv unterstützen, so dass das Brechen nicht behindert sondern gefördert wird. Dadurch ergeben sich sehr gute Kantenqualitäten an den gebrochenen Einzelscheibenkanten. Beim Stand der Technik werden dagegen neben der Brennspur relativ hohe Druckspannungen und Temperaturen erzeugt, die das Brechen des Glases entlang einer vorgegebenen äußeren Ritzspur beeinträchtigen und unerwünschte Abplatzungen von Glasmaterial verursachen.

Da das Glasmaterial im Umfeld der Brennspur beim erfindungsgemäßen Verfahren relativ kalt bleibt, kann auch das Ritzen unmittelbar nach Zersetzen der Folie erfolgen. Eine gesonderte Abkühlung ist nicht erforderlich.

Am Einfachsten können zur Außenatmosphäre offene Durchgänge im Brennquerkanal gewährleistet werden, wenn man an einer Verbundglastafelkante mit dem Brennpunkt des Laserstrahls in der Verbundfolie ansetzt und eine Öffnung bildet und derart mit dem Brennpunkt in der Folie fortschreitet, dass immer Zersetzungsfluide aus der Öffnung austreten, was meist optisch erkennbar ist. Dazu sind insbesondere der Brennpunktdurchmesser und/oder die Laserbrennpunktenergie auf das Folienmaterial und/oder die Foliendicke und/oder die Glastafeldicke und/oder das Glasmaterial und/oder die Fahrgeschwindigkeit des Laserbrennpunktes in der Verbundfolie jeweils empirisch aufeinander abzustimmen.

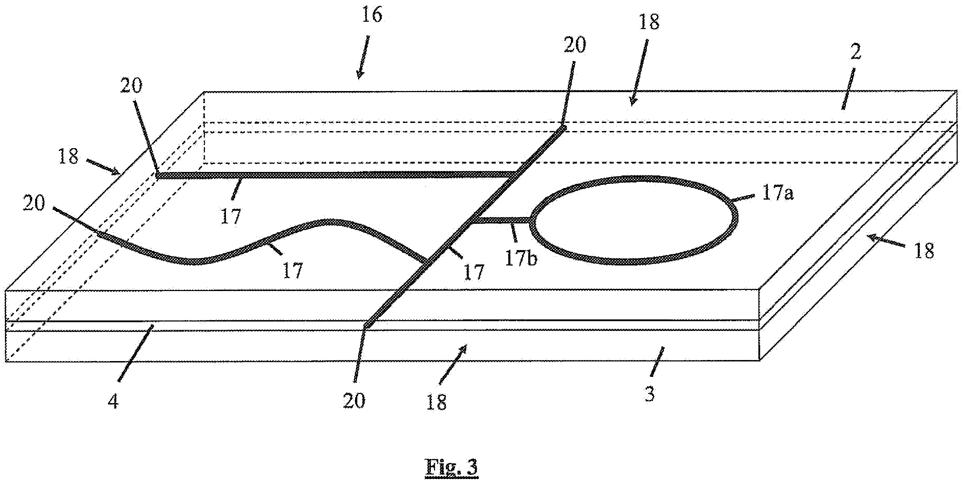

Fig. 3 verdeutlicht, dass die Laserspuren 17 mit Ausgängen 20 an jeweils einer Verbundglastafelkante 18 münden. Sollten in sich geschlossene Brennpunktspuren 17a erzeugt werden für z. B. Modellglasscheiben, z. B. kreisrunde Brennspuren 17a, dann wird erfindungsgemäß zunächst mit einer Hilfsbrennspur 17b an einer zu einer Verbundglastafelkante 18 offenen Brennspur 17 oder an einer Kante 18 begonnen und danach die in sich geschlossene Brennspur 17a erzeugt, die dann mit einer bis zu einer Tafelkante 18 offenen Hilfsbrennspur 17b in Verbindung steht, so dass aus der Brennspur 17a während des Brennens Zersetzungsprodukte bis zu mindestens einem Ausgang 20 gelangen und entweichen können.

Nach der Erfindung werden die Laserbrennspuren 17, 17a, 17b unabhängig von Ritzspuren von Schneidwerkzeugen eines Glastafelschneidetisches in einem davon getrennten Arbeitsgang eingebracht und zwar vorzugsweise vor dem Ritzen. Dabei wird mit einer Vorschubgeschwindigkeit des Brennpunkts in der Folie z.B. zwischen 0,1 und 30 m/min, insbesondere zwischen 1 und 20 m/min, die Brennspur erzeugt. Dabei kann mit geringeren Geschwindigkeiten eine vollständige Trennung der Folie bewirkt werden, was aber je nach Folienart nicht immer erforderlich ist, so dass auch höhere Geschwindigkeiten ausreichend effektiv sein können.

Dagegen liegt die Ritzgeschwindigkeit eines Ritzwerkzeuges eines Glasschneidetisches in der Regel zwischen 1 und 500, insbesondere zwischen 120 und 300 m/min.

Die Erfindung ermöglicht es somit, die Laserbrennspur unabhängig von der Ritzspur zu erzeugen, entweder auf einer eigenständigen Tischanlage oder auf einer vorhandenen Glastafelschneidetischanlage, die mit einer erfindungsgemäßen Lasereinrichtung bestückt sind, oder mit einem die Lasereinrichtung führenden Roboter. In jedem Fall ist das Lasern erfindungsgemäß mit dem mechanischen Ritzen von Trennlinien auf der Glastafeloberfläche kombiniert, weil das anschließende, entlang den Ritzlinien, die sich gegenüberliegend z. B. oberhalb und unterhalb der Laserbrennspur fluchtend angeordnet sind, eingeleitete Brechen zu optimalen Trennkantenqualitäten führt.

Die jeweilige Wahl der Geschwindigkeit, mit der gelasert und geritzt wird, ist empirisch zu ermitteln, weil sehr viele Parameter zur Optimierung des Verfahrens berücksichtigt werden müssen.

Als Laser in der Laserstrahlerzeugungseinrichtung 5 können z.B. gepulst arbeitende Laser mit Pulsfrequenzen zwischen 5 Hertz und 10 Kilohertz verwendet werden. Zur Optimierung der Zersetzung durch den Brennpunkt des Laserstrahls in der Folie sind jedoch kontinuierlich arbeitende Dauerstrich-Laser (continuous wave laser) geeigneter und werden bevorzugt, wobei erfindungsgemäße Laserleistungen zwischen 20 und 500, insbesondere zwischen 50 und 250, vorzugsweise mit mehr als 50 Watt verwendet werden. Die Laser sind vorzugsweise Festkörperlaser mit Wellenlängen zwischen 1,7 µm und 2,8 µm, insbesondere zwischen 1,9 µm und 2,6 µm. Geeignet sind z. B. folgende Feststofflaser:

### Holmium Laser

### Thulium Laser

Prinzipiell sind auch andere Laserstrahlquellen wie z. B. Diodenlaser erfindungsgemäß einsetzbar, sofern sich der Laserstrahl optisch so weiterverarbeiten lässt, dass ein Brennfleck mit ausreichend hoher Energiedichte erzeugt werden kann.

Vorzugsweise werden für die Folienschädigung Brennpunktdurchmesser zwischen 0,001 und 3,0 mm, insbesondere zwischen 0,01 und 0,2 mm bei z. B. Brennweiten der Fokussiereinheit zwischen 10 und 100 mm, insbesondere zwischen 20 und 50 mm verwendet.

Es ist ein Vorteil des erfindungsgemäßen Laserverfahrens, dass es zeitlich und örtlich unabhängig von dem mechanischen Ritzen durchgeführt werden kann, weil die Schädigung der Folie in der Brennspur dauerhaft ist. Zudem ist der für das Brechen günstige Zugspannungszustand des Glasmaterials benachbart der Brennspur ebenfalls dauerhaft. Die erfindungsgemäße Lasererzeugungseinrichtung kann deshalb zweckmäßigerweise einem an sich bekannten Glastafelschneidetisch zugeordnet werden, wobei das Trägergehäuse 8 z. B. an einer feststehenden oder an dessen verfahrbaren Schneidbrücke oder an einer davon unabhängigen, verfahrbaren Brücke sitzen kann und wie ein Schneidwerkzeug daran verfahrbar angeordnet ist.

Neben PVB-Folien können auch alle anderen üblicherweise zwischen den Glastafelscheiben angeordneten Kunststofffolien nach dem erfindungsgemäßen Laserverfahren bearbeitet werden. Solche Folien sind z. B. aus Acrylat-Gießharzen, Polyethylen, Thermoplasten, Epoxid-Harzen, Polyester, Polycarbonat, Polyvinylchlorid, Polyurethan und Polyalkylen-Terephthalat, die gegebenenfalls mit Weichmacher, Zähmodifikatoren und Additivierungen den jeweiligen Anwendungsspektrum angepasst sind. Verwendbar sind auch Laminate dieser Materialien in Form von einem Schichtaufbau.

Mit dem erfindungsgemäßen Verfahren können alle gängigen Foliendicken z. B. von Verbundsicherheitsgläsern von z. B. 0,38 bis 3,8 mm bearbeitet werden.

Für das mechanische Ritzen kann z. B. ein an sich bekanntes Schneidrädchenwerkzeug oder eine an sich bekannte Sandstrahleinrichtung oder eine an sich bekannte Wasserstrahleinrichtung oder ein hybrides Trennen (Anritzen mit anschließendem Trennen mit Wärmeenergie) eingesetzt werden, die eine linienförmige Ritzspur erzeugen, die beim Biegen der Glastafel als Rissursprung fungiert, von dem eine Rissfront ausgeht, die in die Tiefe des Glasmaterials fortschreitet bis zur Laserbrennspur, wobei - wie oben schon erwähnt - die Zugspannungen im Glasmaterial benachbart zur Laserspur die Rissfront beschleunigen können, woraus eine hervorragende Bruchkantenqualität resultiert.

Mit der Erfindung ist es möglich, die Folie mit dem Laser so zu erwärmen, dass es je nach Laserleistung zu einer Verflüssigung der Folie, bei erhöhter Temperatur zum Ausgasen flüchtiger Folienbestandteile und bei sehr hohen Energiedichten auch zum Abbrand der Folie kommt. Für eine PVB-Folie werden vorzugsweise Temperaturen zwischen 200 und 500 insbesondere zwischen 300 und 400°C erzeugt. Für einen erfindungsgemäßen stabilen Prozess, der ohne Delaminationsblasen nahe der Brennspur, die beim Stand der Technik durch einen teilweisen Druckabbau infolge eines geschlossenen Kanals auftreten, abläuft, wird der Laserbrennpunkt von außerhalb der Verbundglastafelkante in die Folie hineinbewegt. Dadurch bildet sich ein nach außen hin offener Kanal über den verflüssigtes Material wie auch Verdampfungs- und Zersetzungsgase entweichen können. Diese Kanalbildung ist eine wesentliche Bedingung für ein erfolgreiches Trennen von Verbundglas.

Es liegt im Rahmen der Erfindung, einen parallel ausgerichteten Laserstrahl zu verwenden, der eine ausreichende Energie zum Zersetzen von Folienmaterial aufweist und einen relativ geringen Durchmesser hat, z. B. zwischen 20 und 500 µm, insbesondere zwischen 25 und 40 µm.

In beiden Ausführungsformen - fokussierter oder paralleler Laserstrahl - sollte bezüglich des Brennstrahls zweckmäßigerweise die Laserenergiedichte im Bereich der Folie > 30 kJ/cm² sein, insbesondere zwischen 40 und 60 kJ/cm² liegen.

## Patentansprüche

1. Verfahren zum Heraustrennen mindestens einer Einzelscheibe vorgegebener Abmessung und Kantenform aus einer Verbundglastafel (16), die mindestens zwei benachbart übereinander angeordnete Verbundglastafelscheiben (2, 3) aufweist, zwischen denen eine Kunststofffolie (4) angeordnet ist, die die Verbundglastafelscheiben (2, 3) miteinander fest verbindet,
**dadurch gekennzeichnet, dass**
- in die Kunststofffolie (4) mit der Energie eines Laserstrahls, insbesondere des Brennpunkts (15) eines fokussierten Laserstrahls (14) oder eines parallelen Laserstrahls ausreichender vorgegebener Energie ein die Kunststoffstruktur der Kunststofffolie (4) zumindest schwächender Laserspurkanal (17) entlang vorgegebener Trennlinien gelegt wird
- der Brennpunkt (15) an einer Verbundglastafelkante (18) angesetzt und der Laserspurkanal (17) derart ausgebildet wird, dass während des fortschreitenden Laserns aus der Kunststofffolie entstehende Zersetzungsfluide über den Laserspurkanal (17) ins Freie entweichen können
- danach mechanisch Ritzlinien fluchtend zum Laserspurkanal (17) in die beiden Oberflächen der Verbundglastafelscheiben (2, 3) eingebracht werden und
- anschließend durch Biegen der Verbundglastafel (16) oder durch Einwirken von Ultraschallenergie das Glasmaterial entlang der Ritzlinien gebrochen wird.

2. Verfahren nach Anspruch 1, **dadurch gekennzeichnet, dass** mit einer Laserstrahlenergie zwischen 20 und 250, insbesondere zwischen 50 und 120 Watt und insbesondere mit Laserwellenlängen zwischen 1,7 µm und 2,8 µm, insbesondere zwischen 1,9 µm und 2,6 µm gelasert wird.

3. Verfahren nach Anspruch 1 und/oder 2, **dadurch gekennzeichnet, dass** mit Brennpunktdurchmessern oder Brennstrahldurchmessern zwischen 0,001 mm und 3 mm, insbesondere zwischen 0,01 und 0,2 mm gelasert wird.

4. Verfahren nach einem oder mehreren der Ansprüche 1 bis 3, **dadurch gekennzeichnet, dass** mit Vorschubgeschwindigkeiten des Brennpunkts (15) zwischen 0,1 und 100 m/min, insbesondere zwischen 0,4 und 5 m/min gelasert wird.

5. Verfahren nach einem oder mehreren der Ansprüche 1 bis 4, **dadurch gekennzeichnet, dass** das Ritzen mit Vorschubgeschwindigkeiten zwischen 1 und 500, insbesondere zwischen 120 und 300 m/min geritzt wird.

6. Verfahren nach einem oder mehreren der Ansprüche 1 bis 5, **dadurch gekennzeichnet, dass** ein gepulster Laser, insbesondere mit Pulsfrequenzen zwischen 5 Hertz und 10 Kilohertz, insbesondere zwischen 10 und 40 Hertz verwendet wird.

7. Verfahren nach einem oder mehreren der Ansprüche 1 bis 5, **dadurch gekennzeichnet, dass** ein Dauerstrich-Laser verwendet wird.

8. Verfahren nach Anspruch 7, **dadurch gekennzeichnet, dass** als Laser ein Holmium YAG Laser oder Thulium dotierter Laser oder Diodenlaser oder Titansaphir-Ultrakurzpulslaser verwendet wird.

9. Verwendung einer Vorrichtung zum Heraustrennen mindestens einer Einzelscheibe vorgegebener Abmessungen aus einer Verbundglastafel (16), die mindestens zwei Verbundglastafelscheiben (2, 3) aufweist, zwischen denen eine Kunststofffolie (4) angeordnet ist, die die Verbundglastafelscheiben (2, 3) miteinander fest verbindet, zur Durchführung des Verfahrens nach einem oder mehreren der Ansprüche 1 bis 8, bestehend aus einer Laserstrahlspurerzeugungseinrichtung (1) zum Legen eines Laserstrahlbrennpunktspurkanals (17) in die Kunststofffolie (4), aufweisend
eine Laserstrahlerzeugungsvorrichtung (5)
eine Laserstrahlrichteinheit im Strahlengang des Laserstrahls der Laserstrahlerzeugungsvorrichtung (5), wobei die Laserstrahlrichteinheit aufweist
- ein Trägergehäuse (8)
- im Trägergehäuse (8) ein Linsensystem
- eine im Strahlengang dem Linsensystem nachgeordnete, eine Verschmutzung des Linsensystems von außen verhindernde Reinigungseinrichtung (11).

10. Verwendung nach Anspruch 9, **dadurch gekennzeichnet, dass** die Laserstrahlrichteinheit eine Fokussiereinheit (7) ist und im Trägergehäuse (8) strahleingangsseitig mindestens eine Kollimatorlinse (9) und strahlausgangsseitig mindestens eine Fokussierlinse (10) angeordnet ist, wobei im Strahlengang (12) der Fokussierlinse (10) nachgeordnet die Reinigungseinheit (11) angeordnet ist.

11. Verwendung nach Anspruch 9 und/oder 10, **dadurch gekennzeichnet, dass** ein Lichtleitkabel (6), vorzugsweise ein Glasfaserkabel, zwischen der Laserstrahlerzeugungsvorrichtung (5) und der Fokussiereinheit (7), das den Laserstrahl von der Laserstrahlerzeugungsvorrichtung (5) in die Fokussiereinheit (7) leitet.

12. Verwendung nach einem der Ansprüche 9 bis 11, **dadurch gekennzeichnet, dass** die Reinigungseinrichtung (11) eine Spülgasstromerzeugungseinrichtung ist, mit der ein Spülgasstrom in das Gehäuse (8) hineingebracht und wieder herausgeleitet werden kann.

13. Verwendung nach Anspruch 12, **dadurch gekennzeichnet, dass** die Reinigungseinrichtung (11) mindestens eine Gasleitung (11a) aufweist, die derart angeordnet ist, dass damit von außen in das Gehäuse (8) hinein der Spülgasstrom leitbar ist.

14. Verwendung nach Anspruch 12 und/oder 13, **dadurch gekennzeichnet, dass** das Gehäuse (8) strahlausgangsseitig offen ist, so dass der Spülgasstrom frei entweichen kann und der Laserstrahl (14) in einen Freiraum gestrahlt wird.

15. Verwendung nach einem der Ansprüche 9 und 11 bis 14, **dadurch gekennzeichnet, dass** das Linsensystem der Laserstrahlrichteinheit derart ausgebildet ist, dass ein parallel ausgerichteter Laserstrahl erzeugt wird.

## Claims

1. A process for separating at least one individual pane of given size and edge form from a laminated glass sheet (16) which has at least two laminated glass sheet panes (2, 3) which are arranged adjacently one above another and between which there is arranged a plastics film (4) which securely connects the laminated glass sheet panes (2, 3) to one another,
**characterised in that**
- a laser track channel (17), which at least weakens the plastics structure of the plastics film (4), is placed in the plastics film (4) along given dividing lines using the energy of a laser beam, in particular of the focal point (15) of a focused laser beam (14) or of a parallel laser beam of sufficient predetermined energy
- the focal point (15) is positioned at a laminated glass sheet edge (18) and the laser track channel (17) is designed such that during the progressive lasering, degradation fluids originating from the plastics film can escape into the open via the laser track channel (17)
- subsequently scoring lines aligned with the laser track channel (17) are made mechanically in both surfaces of the laminated glass sheet panes (2, 3) and
- then the glass material is broken along the scoring lines by bending of the laminated glass sheet (16) or by the action of ultrasonic energy.

2. A process according to claim 1, **characterised in that** lasering takes place with laser beam energy between 20 and 250, in particular between 50 and 120 watts and in particular with laser wave lengths between 1.7 µm and 2.8 µm, in particular between 1.9 µm and 2.6 µm.

3. A process according to claim 1 and/or 2, **characterised in that** lasering takes place with focal point diameters or focal ray diameters between 0.001 mm and 3 mm, in particular between 0.01 and 0.2 mm.

4. A process according to one or more of claims 1 to 3, **characterised in that** lasering takes place with feed speeds of the focal point (15) between 0.1 and 100 m/min, in particular between 0.4 and 5 m/min.

5. A process according to one or more of claims 1 to 4, **characterised in that** the scoring is scored with feed speeds between 1 and 500, in particular between 120 and 300 m/min.

6. A process according to one or more of claims 1 to 5, **characterised in that** a pulsed laser, in particular with pulse frequencies between 5 hertz and 10 kilohertz, in particular between 10 and 40 hertz, is used.

7. A process according to one or more of claims 1 to 5, **characterised in that** a continuous wave laser is used.

8. A process according to claim 7, **characterised in that** a holmium YAG laser or thulium-doped laser or diode laser or titanium-sapphire ultrashort pulse laser is used as a laser.

9. Use of a device for separating at least one individual pane of given size from a laminated glass sheet (16), which has at least two laminated glass sheet panes (2, 3) between which there is arranged a plastics film (4) which securely connects the laminated glass sheet panes (2, 3) to one another, to implement the process according to one or more of claims 1 to 8, consisting of a laser beam track generating appliance (1) for placing a laser beam focal point track channel (17) in the plastics film (4), having
a laser beam generating device (5)
a laser beam directing unit in the beam path of the laser beam of the laser beam generating device (5), wherein the laser beam directing unit has
- a supporting housing (8)
- a lens system in the supporting housing (8)
- a cleaning appliance (11), arranged downstream of the lens system in the beam path, to prevent contamination from the exterior of the lens system.

10. Use according to claim 9, **characterised in that** the laser beam directing unit is a focusing unit (7) and in the supporting housing (8) there are arranged at least one collimator lens (9) at the beam entry side and at least one focusing lens (10) at the beam exit side, wherein the cleaning unit (11) is arranged downstream of the focusing lens (10) in the beam path (12).

11. Use according to claim 9 and/or 10, **characterised in that** a fibre optic cable (6), preferably a glass fibre cable, [is arranged] between the laser beam generating device (5) and the focusing device (7), which cable conveys the laser beam from the laser beam generating device (5) into the focusing unit (7).

12. Use according to any one of claims 9 to 11, **characterised in that** the cleaning appliance (11) is a purge gas flow generating device with which a purge gas flow can be introduced into the housing (8) and conveyed therefrom again.

13. Use according to claim 12, **characterised in that** the cleaning appliance (11) has at least one gas line (11a) arranged in such a manner that the purge gas flow is thereby conveyable into the housing (8) from the exterior.

14. Use according to claim 12 and/or 13, **characterised in that** the housing (8) is open at the beam exit side, so that the purge gas flow can escape freely and the laser beam (14) is radiated into a free space.

15. Use according to any one of claims 9 and 11 to 14, **characterised in that** the lens system of the laser beam directing unit is such that a parallel-directed laser beam is generated.

## Revendications

1. Procédé de séparation d'au moins une vitre individuelle de dimension et forme d'arête prédéfinies d'un panneau de verre composite (16) qui présente au moins deux vitres de panneau de verre composite (2, 3) disposées de manière adjacente l'une au-dessus de l'autre, entre lesquelles un film plastique (4) est disposé, lequel relie fixement l'une à l'autre les vitres de panneau de verre composite (2, 3),
**caractérisé en ce que**
- dans le film plastique (4), avec l'énergie d'un faisceau laser, en particulier du point de combustion (15) d'un faisceau laser (14) focalisé ou d'un faisceau laser parallèle d'énergie prédéfinie suffisante, un canal de trace de laser (17) au moins affaiblissant la structure plastique du film plastique (4) est posé le long de lignes de séparation prédéfinies,
- le point de combustion (15) est placé au niveau d'une arête de panneau de verre composite (18) et le canal de trace de laser (17) est réalisé de telle manière que des fluides de décomposition apparaissant pendant la propagation du laser depuis le film plastique puissent s'échapper vers l'extérieur par le biais du canal de trace de laser (17),
- puis des lignes de rayure sont ménagées mécaniquement en alignement sur le canal de trace de laser (17) dans les deux surfaces des vitres de panneau de verre composite (2, 3) et
- ensuite par pliage du panneau de verre composite (16) ou par action d'énergie à ultrasons, le matériau de verre est rompu le long des lignes de rayure.

2. Procédé selon la revendication 1, **caractérisé en ce qu'**une découpe au laser est réalisée avec une énergie de faisceau laser comprise entre 20 et 250, en particulier entre 50 et 120 watts et en particulier avec des longueurs d'onde de laser comprises entre 1,7 µm et 2,8 µm, en particulier entre 1,9 µm et 2,6 µm.

3. Procédé selon la revendication 1 et/ou 2, **caractérisé en ce que** la découpe au laser est réalisée avec des diamètres de point de combustion ou diamètres de rayon de combustion compris entre 0,001 mm et 3 mm, en particulier entre 0,01 et 0,2 mm.

4. Procédé selon l'une ou plusieurs des revendications 1 à 3, **caractérisé en ce que** la découpe au laser est réalisée avec des vitesses d'avance du point de combustion (15) comprises entre 0,1 et 100 m/min, en particulier entre 0,4 et 5 m/min.

5. Procédé selon l'une ou plusieurs des revendications 1 à 4, **caractérisé en ce que** la rayure est réalisée avec des vitesses d'avance comprises entre 1 et 500, en particulier entre 120 et 300 m/min.

6. Procédé selon l'une ou plusieurs des revendications 1 à 5, **caractérisé en ce qu'**un laser pulsé, en particulier avec des fréquences de pulsation comprises entre 5 hertz et 10 kilohertz, en particulier entre 10 et 40 hertz, est utilisé.

7. Procédé selon l'une ou plusieurs des revendications 1 à 5, **caractérisé en ce qu'**un laser à onde continue est utilisé.

8. Procédé selon la revendication 7, **caractérisé en ce qu'**un laser YAG à l'holmium ou un laser dopé au thulium ou un laser à diodes ou un laser à pulsation ultracourte au titane saphir est utilisé en tant que laser.

9. Utilisation d'un dispositif de séparation d'au moins une vitre individuelle de dimensions prédéfinies d'un panneau de verre composite (16) qui présente au moins deux vitres de panneau de verre composite (2, 3) entre lesquelles un film plastique (4) est disposé, lequel relie fixement l'une à l'autre les vitres de panneau de verre composite (2, 3) pour la réalisation du procédé selon l'une ou plusieurs des revendications 1 à 8, se composant d'un dispositif de génération de trace de faisceau laser (1) pour la pose d'un canal de trace de point de combustion de faisceau laser (17) dans le film plastique (4), présentant
un dispositif de génération de faisceau laser (5)
une unité de direction de faisceau laser dans le chemin du faisceau laser du dispositif de génération de faisceau laser (5), dans laquelle l'unité de direction de faisceau laser présente
- un boîtier de support (8)
- dans le boîtier de support (8), un système de lentille
- un dispositif de nettoyage (11) empêchant une salissure du système de lentille de l'extérieur, disposé après le système de lentille dans le chemin de faisceau.

10. Utilisation selon la revendication 9, **caractérisée en ce que** l'unité de direction de faisceau laser est une unité de focalisation (7) et, dans le boîtier de support (8), est disposée côté entrée de faisceau au moins une lentille de collimateur (9) et, côté sortie de faisceau, au moins une lentille de focalisation (10), dans laquelle l'unité de nettoyage (11) est disposée dans le chemin de faisceau (12) après la lentille de focalisation (10).

11. Utilisation selon la revendication 9 et/ou 10, **caractérisée en ce qu'**un câble de guidage de lumière (6), de préférence un câble de fibre de verre, entre le dispositif de génération de faisceau laser (5) et l'unité de focalisation (7), conduit le faisceau laser du dispositif de génération de faisceau laser (5) dans l'unité de focalisation (7).

12. Utilisation selon l'une des revendications 9 à 11, **caractérisée en ce que** le dispositif de nettoyage (11) est un dispositif de génération de courant de gaz de rinçage avec lequel un flux de gaz de rinçage peut être introduit dans le boîtier (8) et de nouveau retiré.

13. Utilisation selon la revendication 12, **caractérisée en ce que** le dispositif de nettoyage (11) présente au moins une conduite de gaz (11a) qui est disposée de telle manière que le flux de gaz de rinçage puisse être conduit ainsi de l'extérieur dans le boîtier (8).

14. Utilisation selon la revendication 12 et/ou 13, **caractérisée en ce que** le boîtier (8) est ouvert côté sortie de faisceau de sorte que le flux de gaz de rinçage puisse s'échapper librement et le faisceau laser (14) soit émis dans un espace libre.

15. Utilisation selon l'une des revendications 9 et 11 à 14, **caractérisée en ce que** le système de lentille de l'unité de direction de faisceau laser est réalisé de telle manière qu'un faisceau laser orienté parallèlement soit généré.
